# EUROPEAN PATENT SPECIFICATION

(11) **EP 1 601 161 B1**
(45) Date of publication and mention of the grant of the patent: **11.01.2012**
(21) Application number: 05252730.6
(22) Date of filing: 03.05.2005
(51) Int. Cl.: H04L 29/06

(54) **Network interface card for supporting multi-streaming format and method thereof**
Netzwerkschnittstellenkarte zur Unterstützung mehrerer Streaming-Formate und entsprechendes Verfahren
Carte d'interface de réseau pour supporter plusieurs formats de diffusion en continu et procédé correspondant

(30) Priority: 04.05.2004 KR 2004031479
(43) Date of publication of application: 30.11.2005
(73) Proprietor: SAMSUNG ELECTRONICS CO., LTD., Suwon-si, Gyeonggi-do (KR)
(72) Inventor: An, Cheol-Hong, Youngtong-dong Yeongtong-gu Suwon-si (KR)
(74) Representative: Robinson, Ian Michael

(56) References cited:
- US-A1- 2001 014 927
- US-A1- 2001 046 237
- US-A1- 2004 064 590
- SCHULZRINNE H ET AL: "RFC 1889: RTP: A Transport Protocol for Real-Time Applications" NETWORK WORKING GROUP REQUEST FOR COMMENTS, January 1996 (1996-01), pages 1-38, XP002229836

## Description

Apparatuses and methods consistent with the present invention relate to a network interface card, and more particularly to a network interface card for supporting a multi-streaming format.

As a digital technology has been widely spread and developed, various kinds of digital devices have become available to consumers. For example, many kinds of digital audio or video devices (hereinafter, referred to as "AV devices"), such as DVD players, cable set-top boxes, digital video cassette recorders (DVCRs), digital TVs (DTVs), and personal computers (PCs), may be connected to one network. Such AV devices can transmit and/or receive AV streams such as MPEG2 transport streams through various network interfaces (network I/Fs) and protocols which are communication languages between devices.

Recently, a number of consumer electronic companies have formed the Digital Home Working Group (DHWG) in order to ensure flexibility between AV devices and to activate home network markets. An object of the DHWG is to allow digital household devices to be available from markets as soon as possible by utilizing existing-standardized techniques rather than adopting new international standardized techniques. To this end, functions supporting network communication between devices are necessarily required.
In order to achieve such network communication between devices, communication protocols for transmitting and/or receiving data through a network must be defined, and a network interface card for supporting the communication protocols must be installed on each device.

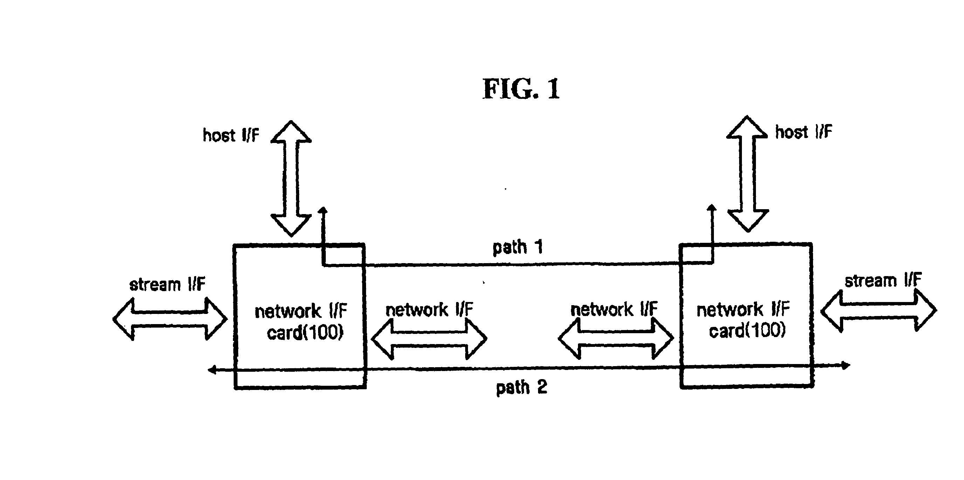

Conventionally, as shown in Figure 1, Internet Protocol (IP) packets are transmitted and/or received only between host I/Fs of devices via a first path 1, and non-IP packets, such as MPEG2-transport streams (MPEG2-TSs), are transmitted/received only between stream I/Fs of devices via a second path 2. Herein, the host I/F means an interface for connecting an network I/F card 100 to a communication bus linked with a host central processor unit (CPU). For example, the host I/F connects the network I/F card to a Peripheral Component Interconnect (PCI) bus or an Industry Standard Architecture (ISA) bus. Also, the stream I/F means an interface for providing raw AV steams, which are not converted into IP packets, or for making connection with an AV decoder/encoder for receiving and reproducing raw AV steams.

As described above, according to a conventional technology, data may be transmitted and/or received only between the host I/Fs or only between the stream I/Fs, so the conventional technology cannot be adapted for various devices. For example, a server unit transfers AV streams by using IP packets, but a client cannot receive the IP packets. In this case, it is necessary for the client to employ either a high-level CPU or additional hardware in order to process the IP packets. As a result, prices of devices may increase.

US 2004/0064590 discloses a network storage interface system in which a network interface card is connected to an audio/video interface and a client network stack. A stream of AV data including RTP headers is prepended with a UDP header for being fragmented and prepended with IP and Ethernet headers and transmitted on a network. The RTP header contains a time stamp that indicates the relative times at which the AV data is packetized by the audio/video interface. This document forms the pre-characterising portion of the claims appended hereto.

According to the present invention there is provided an apparatus and method as set forth in the appended claims. Preferred features of the invention will be apparent from the dependent claims, and the description which follows.

The present invention provides a network interface card for supporting a multi-streaming format and a method thereof, which can output real-time data transferred by using various protocols through various interfaces.

The present invention provides a network interface card for supporting a multi-streaming format and a method thereof, which can transmit/receive real-time data between a host I/F and a stream I/F in one device.

According to an aspect of the present invention, there is provided a network interface card comprising: a host interface connected to a communication bus linked with a host central processor unit; a stream interface connected to an audio or video (AV) decoder/encoder; a network interface connected to a network; and a data reception module characterised by comprising: a parser which reads a predetermined header in order to determine a type and a transmission direction of an input packet, a header removing unit which removes the predetermined header from the input packet, a tag recording unit which creates a tag for recording time information for every predetermined number of bytes within the packet if the packet, from which the predetermined header is removed, has no tag and attaches tag to the predetermined number of bytes within the packet, and a tag removing unit which removes the tag existing in the packet by receiving the packet, from which the predetermined header is removed, at a time corresponding to the time stamp in order to create AV stream units and outputs the AV stream units through the stream interface.

In order to process the input packet when the type of the input packet is an IP packet, the data reception module further includes an IP header removing unit for removing an IP header from the packet, and a UDP header removing unit for removing a UDP header from the packet, from which the IP packet header is removed, so as to provide the packet to the tag recording unit.

In order to process the input packet when the type of the input packet is an IP packet, the data reception module further includes an IP header removing unit for removing an IP header from the packet, a UDP header removing unit for removing a UDP header from the packet, from which the IP header is removed, and an RTP header removing unit for removing an RTP header from the packet, from which the UDP header is removed, so as to provide the packet to the tag recording unit.

The time stamp may be created by using a time value corresponding to a predetermined amount of bytes of a packet to be tagged, which is calculated by computing an input bit-rate on the basis of a local clock.

In order to create the time stamp, if the packet, from which the predetermined header is removed, has reference clock information, time information of the tag may be created in the tag by detecting the reference clock information and uniformly distributing time with regard to data included in a period of the reference clock.

A bit-rate input on the basis of a reference clock of an RTP time stamp, which is delivered from the RTP header removing unit and included in the RTP header, may be calculated and represented as a time stamp reference clock of a tag, thereby creating each tag.

According to an aspect of the present invention, there is provided a data reception method in a network interface card, the reception method comprising: (a) reading a predetermined header and determining a type of an input packet and a transmission direction of the input packet; (b) removing the predetermined header from the input packet; (c) outputting the packet, in which the predetermined header is removed, through a host interface if the transmission direction of the packet is identical to a direction of the host interface; characterised by: (d) creating a tag for every predetermined number of bytes within the packet if the packet, in which the predetermined header is removed, has no tag and adding the tag to the predetermined number of bytes within the packet; and (e) creating audio or video (AV) streams by receiving the packet, in which the header is removed, at a time corresponding to the tag and removing a tag existing in the packet and outputting the AV stream units through a stream interface.

The data reception method may further comprise removing an IP header and a UDP header from the packet, from which the predetermined header is removed, if the transmission direction of the packet is identical to a direction of the stream I/F and the IP header exists in the packet.

According to an aspect of the present invention, there is provided a network interface card comprising: a host interface connected to a communication bus linked with a host CPU; a stream interface connected to an audio or video (AV) decoder/encoder; a network interface connected to a network; a data transmission module comprising: a tag generating unit which generates a tag for recording time information of AV stream units, and adds the tag to the AV stream units input through the stream interface; an aggregator which aggregates a predetermined amount of the AV.stream units, in which tag information is generated, in order to form a packet; and a header attaching unit which generates a predetermined header including information regarding a type of a packet to be transferred and a transmission direction of the packet, and adds the predetermined header to the packet; and a data reception module, characterised in that: the data reception module comprises: a parser which reads a predetermined header in order to determine a type and a transmission direction of an input packet, a header removing unit which removes the predetermined header from the input packet, a tag recording unit which creates a tag for recording time information for every predetermined number of bytes within the packet if the packet, from which the predetermined header is removed, has no tag and attaches tag to the predetermined number of bytes within the packet, and a tag removing unit which removes the tag existing in the packet by receiving the packet, from which the predetermined header is removed, at a time corresponding to the time stamp in order to create AV stream units and outputs the AV stream units through the stream interface.

According to an aspect of the present invention, there is provided a data transmission method in a network card interface, the data transmission method characterised by comprising: (a) generating tag recording time information and attaching the tag to an audio or video (AV) stream unit input to a stream interface; (b) forming one packet from a predetermined amount of AV stream units having tag information; (c) attaching a User Datagram Protocol (UDP) header and an Internet Protocol (IP) header to the packet when the AV stream units are transferred while being converted into an IP packet; (d) creating a predetermined RTP header including information regarding a type of a packet to be transferred and a transmission direction of the packet and adding the predetermined RTP header to the packet; and (e) forming a Media Access Control (MAC) frame by adding a MAC header to the packet, to which the predetermined header is added, and transferring the MAC frame on a network.

The above and other aspects of the present invention will be more apparent from the following detailed description taken in conjunction with the accompanying drawings, in which:
Figure 1 shows data transmission/reception directions of a conventional network I/F card;
Figure 2 shows data transmission/reception directions of a network I/F card according an exemplary embodiment of to the present invention;
Figure 3 is a view showing an external appearance of a network I/F card according to an exemplary embodiment of the present invention;
Figure 4 is a schematic view showing an internal structure of an AV device according to an exemplary embodiment of the present invention;
Figure 5 is a schematic view showing an internal structure of an AV device according to another exemplary embodiment of the present invention;
Figure 6A is a view showing a data flow in six paths shown in Figure 2;
Figure 6B is a view showing a data flow in a third path shown in Figure 2;
Figure 6C is a view showing a data flow in a fourth path shown in Figure 2;
Figure 6D is a view showing a data flow in a second path shown in Figure 2;
Figure 6E is a view showing a data flow in fifth and sixth paths shown in Figure 2;
Figure 7 is a block diagram showing structure of a data transmission module of a network I/F card according to an exemplary embodiment of the present invention;
Figure 8 is a view showing a procedure of utilizing time information, which is recorded by a source device, in a destination device;
Figure 9 is a block diagram showing a structure of a data reception module of a network I/F card according to an exemplary embodiment of the present invention;
Figure 10 is a view showing a structure of an RTP header format;
Figure 11 is a view showing a structure of a UDP header format;
Figure 12 is a view showing a structure of an IP header format;
Figure 13 is a view showing a structure of a TAG packet format;
Figure 14 is a view showing a structure of a format of an aggregated packet;
Figure 15 is a view showing a structure of a format of an IP packet containing AV streams;
Figures 16A and 16B are views showing structures of formats in which an LLC header and a SNAP header are attached to an IP packet;
Figure 17 is a view showing a structure of an LLC header and SNAP header format;
Figure 18 is a view showing a structure of a MAC frame format;
Figure 19 is a flowchart representing an operation of a data transmission module of a network I/F card; and
Figure 20 is a flowchart representing an operation of a data reception module of a network I/F card.

Hereinafter, exemplary embodiments of the present invention will be described in detail with reference to the accompanying drawings.

Advantages and features of the present invention, and methods for achieving them will be apparent to those skilled in the art from the detailed description of the exemplary embodiments together with the accompanying drawings. However, the scope of the present invention is not limited to the exemplary embodiments disclosed in the specification, and the present invention can be realized in various types. The described exemplary embodiments are presented only for completely disclosing the present invention and helping those skilled in the art to completely understand the scope of the present invention, and the present invention is defined only by the scope of the claims. Additionally, the same reference numerals are used to designate the same elements throughout the specification and drawings.

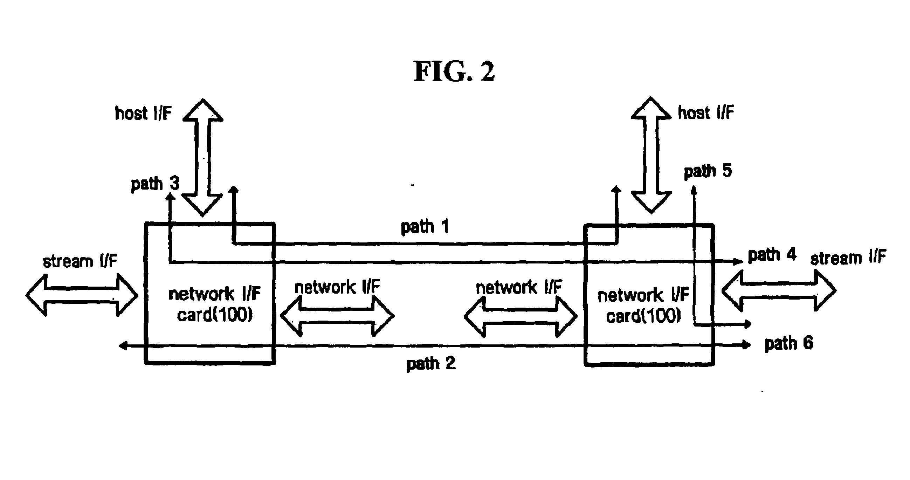

Figure 2 is a view showing data input/output directions provided by a network I/F card 100 according to the present invention. Similar to the conventional network I/F card, the network I/F card 100 may support input/output of an AV stream between interfaces via a first path 1 and a second path 2 while supporting data input/output in various directions.

In detail, the network I/F card 100 supports the data input/output when data input from a host I/F of one device are output to a stream I/F of another AV device through a fourth path 4, when data input from a stream I/F of one AV device are output to a host I/F of another AV device in a third path 3, when data input from a host I/F of one AV device are output to a stream I/F of the AV device in a sixth path 6, that is, a downlink loop-back, and when data input from a stream I/F of one AV device are output to a host I/F of the AV device in a fifth path 5, that is, an uplink loop-back.

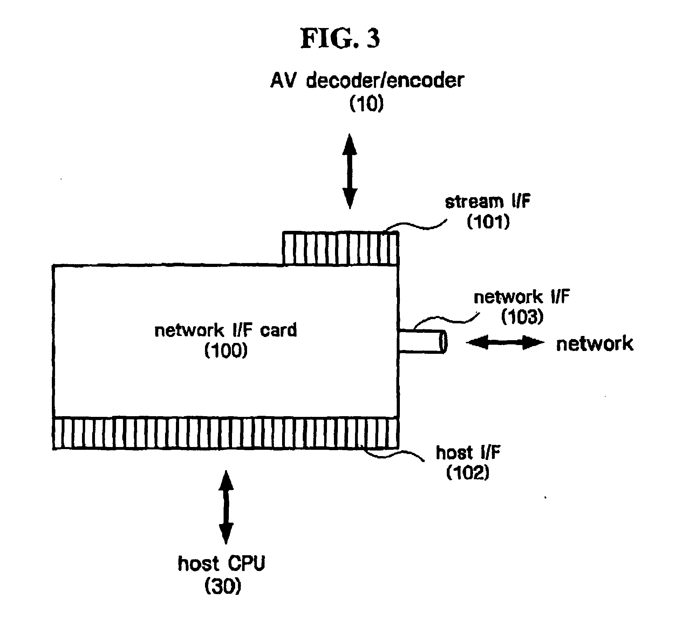

Figure 3 is a view showing an external appearance of the network I/F card 100 according to an exemplary embodiment the present invention. The card 100 includes a network I/F 103 for providing an interface connecting the card 100 to a network, a host I/F 102 for providing an interface connecting the card 100 to communication buses 20 such as a PCI bus, an ISA bus, etc., which are linked with a host CPU 30 and an external card, and a stream I/F 101 for providing an interface connecting the card 10 to AV decoder/encoder 10.

Herein, the AV decoder/encoder 10 includes an AV decoder receiving AV streams, such as MPEG2-TSs input through the stream I/F of the network I/F card 100, and displaying the AV streams as audio and video signals by decoding the AV streams, or an AV encoder reproducing AV streams in order to provide the AV streams to the network I/F card 100. That is, the AV decoder/encoder 10 uncompresses AV streams according to the AV stream type so as to restore the AV streams into raw audio or video data. Also, the AV decoder/encoder 10 generates AV streams through a predetermined compression method, such as MPEG, based on the raw audio or video data.

It is well known to the skilled in the art that the AV decoder/encoder 10 can be embodied as a one chip structure or a separate unit having the above-described functions.

As described above, the network I/F card 100 according to the present invention may allow the AV devices to be used under various server/client environments. For example, an AV device, which is a server, receives an MPEG2-TS generated by the AV encoder 10, creates IP packets through a process within the network I/F card 100 without assistance of a host CPU 30, and transfers the created IP packets to an AV device which is a client.

Similarly, the AV device, which is the client, processes the transferred IP packets in the network I/F without assistance of the host CPU 30 and restores the IP packets into MPEG2-TSs, thereby immediately delivering the restored MPEG2-TSs to the AV decoder 10.

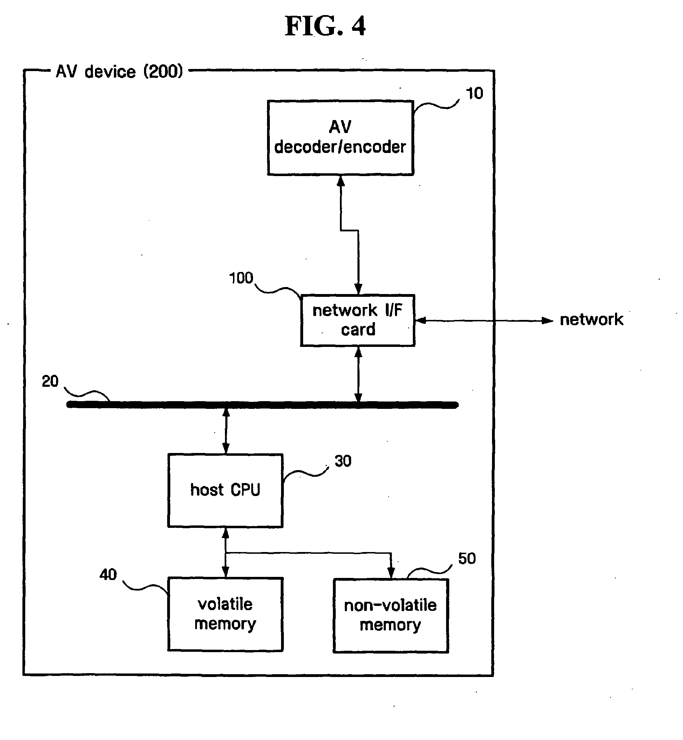

Figure 4 is a schematic view showing an internal structure of the AV device 100 according to an exemplary embodiment of the present invention. The network I/F card 100 is connected to the communication bus such as a PCI bus or an ISA bus through the host I/F. Also, the host CPU 30 of the AV device 100 is connected to the communication bus so as to make communication with the network I/F card 100. Also, the host CPU 30 can be connected to a volatile memory 40, such as a RAM which is installed for loading data, programs, etc., to be operated, through an additional bus (not shown) and can be connected to a non-volatile memory 50, such as a ROM, a hard-disk, or a CD-ROM storing the program, data, etc., through an additional bus (not shown) in such a manner that the host CPU 30 can process the loaded programs.

The non-volatile memory 50 can store AV streams stored as an MPEG2-TS format and a program, which can generate a Real-Time Transport Protocol (RTP) packet, a User Datagram Protocol (UDP) packet, or an Internet protocol (IP) packet by changing the AV streams into the packets. Also, the non-volatile memory 50 can store a program generating AV streams by removing a header of the received IP packet from the IP packet. All programs described above are processed by the host CPU 30.

Meanwhile, the network IF card 100 can be immediately connected to the AV decoder/encoder 10 through the stream I/F so as to immediately output AV streams to the AV decoder/encoder 10 or to immediately receive AV streams from the AV decoder/encoder 10.

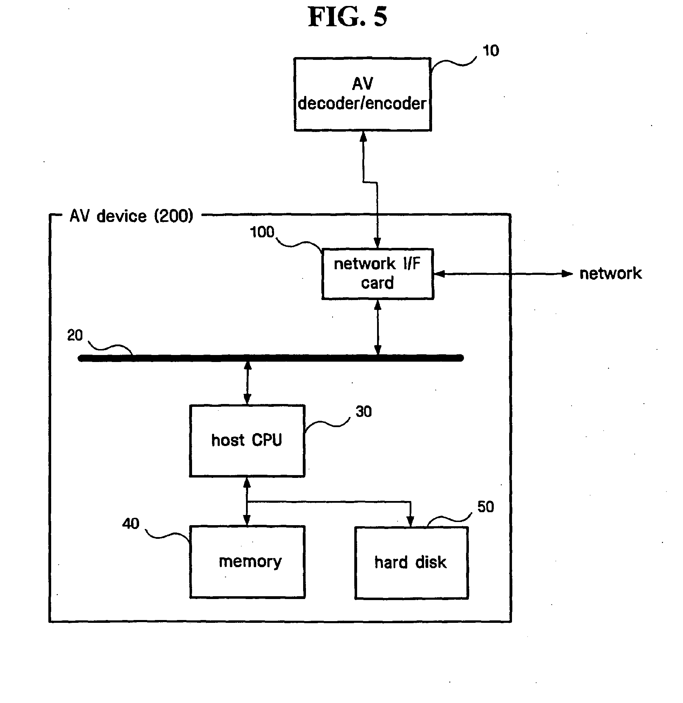

Figure 5 is a view showing that the AV decoder/encoder 10 is installed at the outside of the AV device 100 differently from the AV decoder/encoder 10 shown in Figure 4. For example, if the AV device 100 is a PC, a DVD player can be connected to the outside of the PC. As described above, a unit decoding AV streams into raw AV data or encoding raw AV data into AV streams can be positioned at the outside or the inside of the AV device 100.

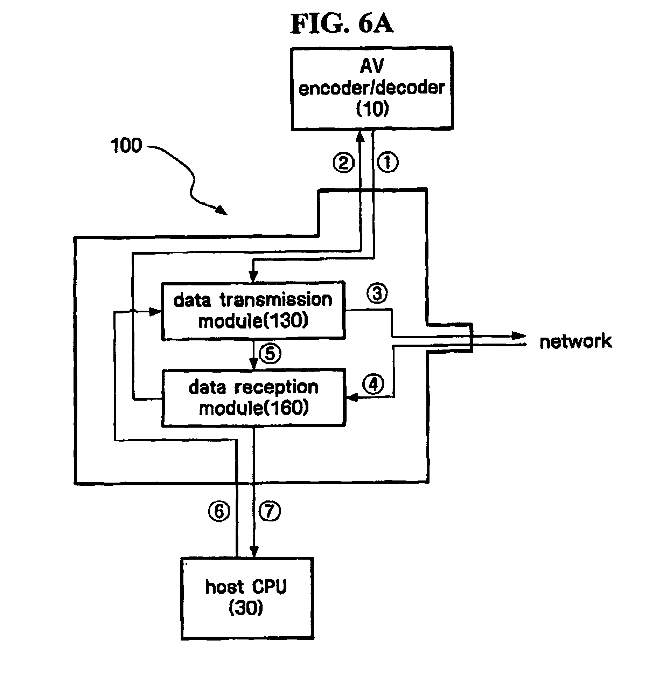

Figure 6A is a view showing a data flow in six paths shown in Figure 2. Herein, description about the first path and the second path will be omitted because the first path and the second path are identical to those of the conventional technique. The third path is used for delivering data through routes ① and ③ in one AV device to a network, or delivering data through routes ④ and ⑦ of another AV device to a host CPU. Also, the fourth path is used for delivering data through routes ⑥ and ③ of one AV device to a network, or delivering data through routes ④ and ② of another AV device to an AV decoder/encoder.

In addition, the fifth path, which is uplink loop-back, is used for delivering data through routes ①, ⑤, and ⑦ of one AV device to a host CPU of the AV device. Finally, the sixth path, which is downlink loop-back, is used for delivering data through routes ⑥, ⑤, and ② of one AV device to an AV decoder/encoder of the AV device.

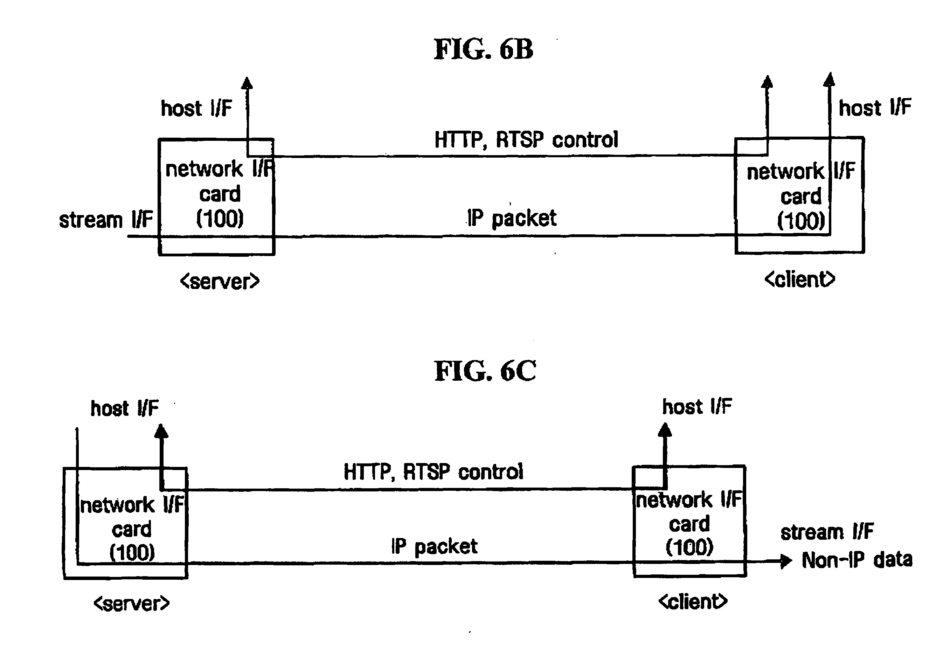

Examples for using such various paths are shown in Figures 6B to 6F. Figure 6B is a view showing an example of a data flow realized in the third path. Herein, control between a server and a client is achieved by using packets of Internet protocols (IPs) such as a Real Time Streaming Protocol (RTSP) and a Hyper-Text Transfer Protocol. Also, data are input into the stream I/F as AV streams, pass through the network I/F card 100 of the server so as to be converted into IP packets, and then, are output to a host I/F of the client.

Figure 6C is a view showing an example of a data flow realized in the fourth path. Herein, control between a server and a client is achieved by using packets of IPs such an RTSP and an HTTP. Also, data are delivered in the form of an IP packet input through the host I/F, and then, an IP header, a UDP header, and an RTP header of the delivered data are removed in a network I/F card 100 of the client so as to be output to a stream I/F of the client.

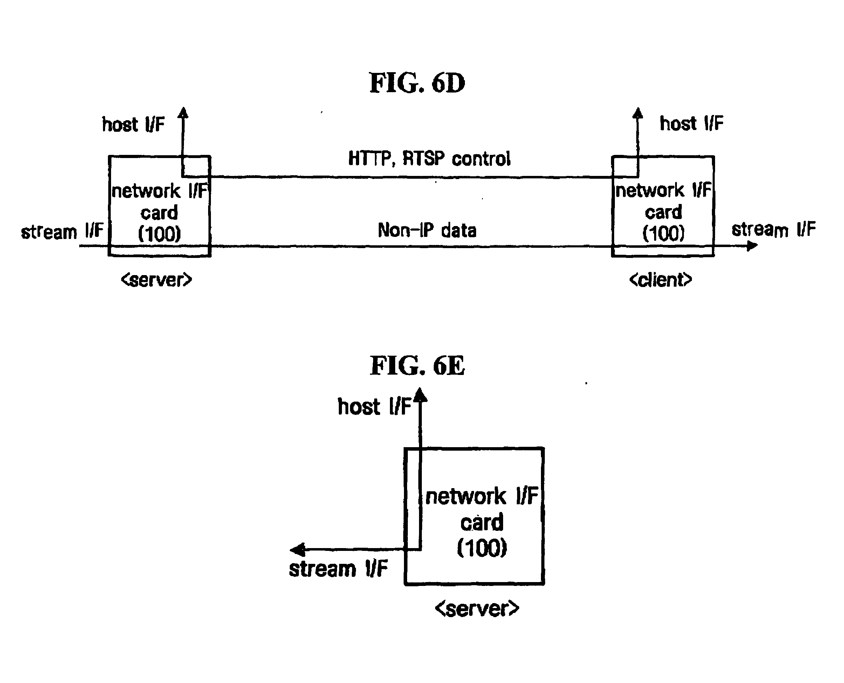

Figure 6D is a view showing an example of a data flow realized in the second path. Herein, control between a server and a client is achieved by using packets of IPs such an RTSP and an HTTP. Also, data are input into a stream I/F of a server in the form of a non-IP data and transferred to a client. After that, the transferred non-IP data are output to a stream I/F of the client.

Figure 6E is a view showing an example of data flow realized in the fifth path (uplink loop-back) and the sixth path (downlink loop-back). In one AV device, which is a server or a client, AV streams, which are non-IP data input through a stream I/F, are changed into IP packets in the network I/F card 100 and are output to the host CPU 30 (uplink loop-back). Also, in one AV device, IP packets input through a host I/F are changed into AV streams, which are non-IP data, through a header removing procedure in the network I/F card 100 and transferred to a stream I/F. As described above, an exemplary embodiment employing loop-back of the network I/F card 100 can be mainly used for a PVR application.

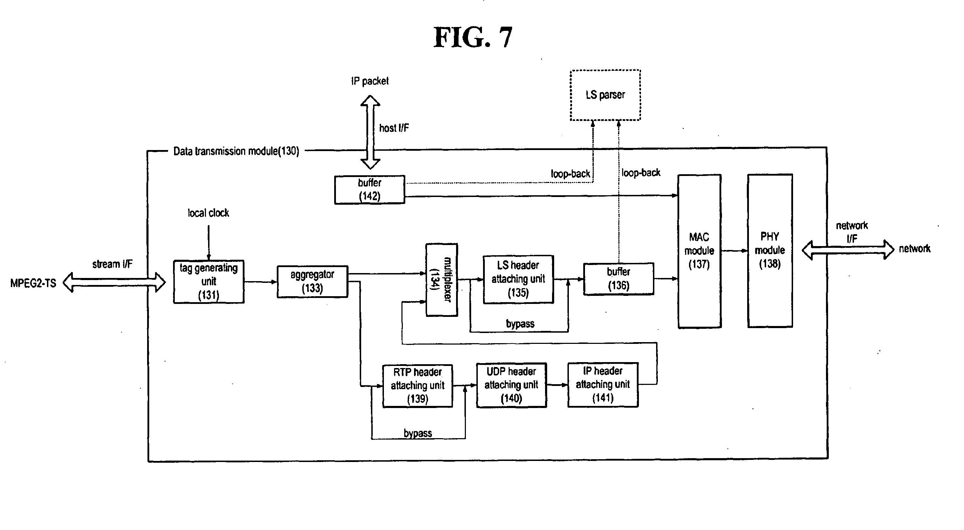

Figure 7 is a view showing a structure of a data transmission module 130 shown in Figure 6A.

A tag generating unit 131 generates tag information recording time information of AV streams and adds the tag information to AV streams input from the AV encoder 10 through a stream I/F. The time information is recorded as a count value through a clock of 27 MHz provided by a clock generating unit (not shown). However, a 'NULL' value can be recorded in the tag if it is necessary by a user. It is generally known in the art that AV streams having a tag of the 'NULL' value are similar to AV streams having no tag.

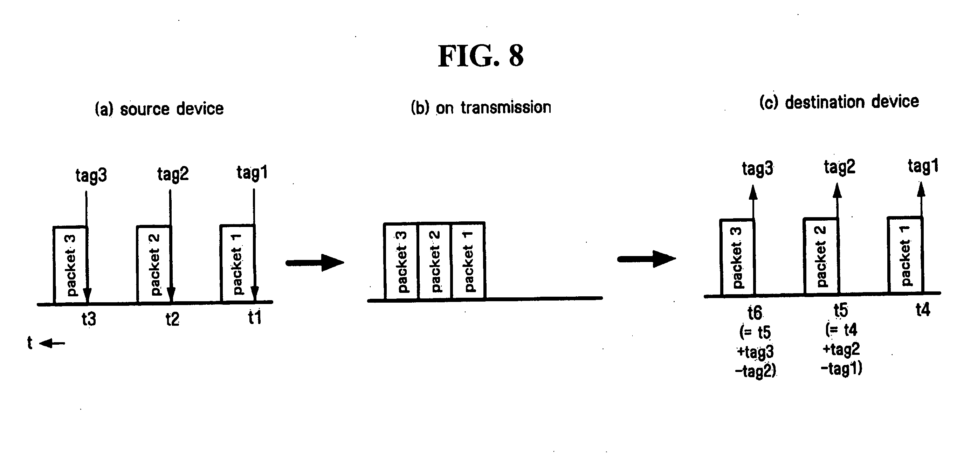

Hereinafter, a procedure of utilizing tag information in a destination device when the time information recorded in a tag by a source device has been delivered to the destination device will be described with reference to Figure 8. Whenever an MPEG2-TS is input to a stream I/F of a data transmission device, the tag generating unit 131 records a time count value of an internal clock as tag information. In detail, count values 't1', 't2', and 't3' are recorded in tags of a first packet, a second packet, and a third packet, respectively.

However, when the packets are transferred through a network, the packets may be transferred without time intervals. The destination device receives the packets transferred as described above, restores original time intervals, and then, delivers the MPEG2-TS to the AV decoder 10 through the stream I/F. On the assumption that the first packet is output through the stream I/F at count value 't4', the second packet is output after waiting for a time interval between a first tag and a second tag, that is, the second packet is output when count value 't5' has been reached. Also, the third packet is output after waiting for a time interval between a third tag and the second tag, that is, the third packet is output when count value 't6' has been reached.

As described above, AV streams are output through the stream I/F in correspondence with an original time interval of the source device so that the AV streams can be timely decoded in the AV decoder 10. If such a tag is not used, a problem may occur because reproduced audio or video signals do not match with an actual reproduce speed when reproducing the audio or the video signals in the AV decoder 10. However, time information may not be recorded in tags according to characteristics of devices.

Meanwhile, several kinds of AV streams can be provided according to encoding methods. For example, AV streams formats are utilized in match with encoding methods, such as MPEG, MPEG2, MPEG4, and H.264. In the following description of an exemplary embodiment the present invention, the MPEG2-TS will be described as an example of AV streams.

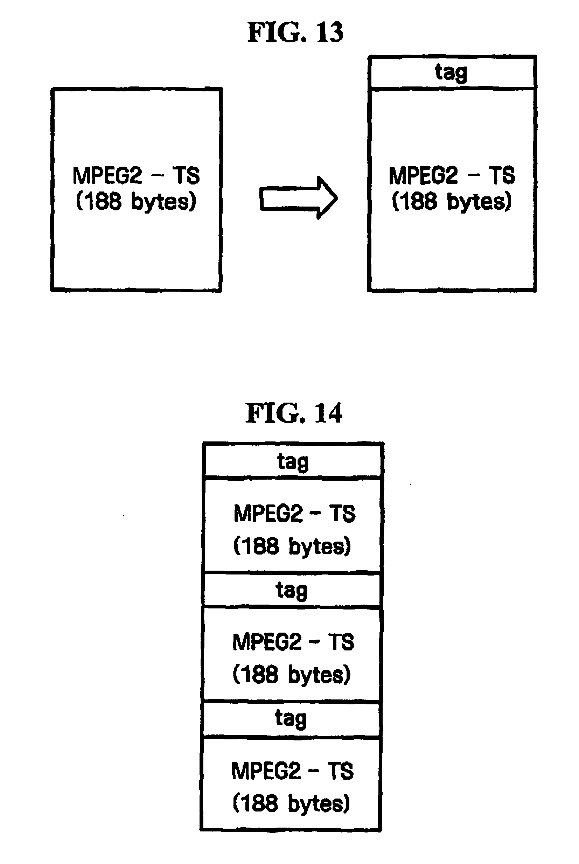

A format having a tag attached thereto by the tag generating unit 131 is shown in Figure 13.

An aggregator 133 aggregates a predetermined amount of data delivered from a multiplexer 132 so as to form one packet. At this time, the delivered data may have a tag attached thereto or have no tag. A packet format formed by using the predetermined amount of data aggregated by the aggregator 133 is shown in Figure 14.

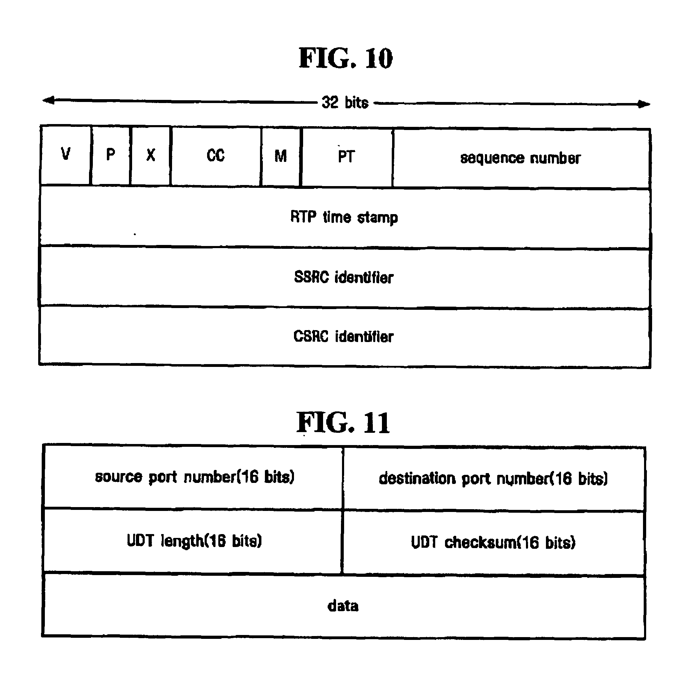

An RTP header attaching unit 139 inserts an RTP header shown in Figure 10 into the aggregated data when the aggregated data support an RTP protocol. If the aggregated data do not support the RTP protocol, the RTP header attaching unit 139 is bypassed. Herein, each field of the RTP header has a meaning according to an RTP protocol rule. Figure 10 is a view showing a structure of an RTP header format in detail. The RTP header includes a version number (V) field, a padding (P) field, an extension (X) field, a marker information (M) field, a payload type (PT) field, a sequence number field, an RTP time stamp field, a synchronization source identifier (SSRC ID) field, and a contributing source identifier (CRSC) field.

A procedure of controlling a processing time is achieved through the RTP time stamp when removing the RTP header. In addition, it is possible to control or produce real-time video signals or voice signals.

A UDP header attaching unit 140 attaches a UDP header shown in Figure 11 to data delivered by the RTP header attaching unit 139, or data immediately delivered from the aggregator 133 through a bypass route. Each field of the UDP header has a meaning according to a definition of a UDP header. The UDP provides a connection-reply service and a simple header format. The UDP header includes a 16-bit source port number field, a 16-bit destination port number field, a 16-bit UDP length field representing the length of data, and a UDP checksum field for ensuring reliability of a UDP packet as shown in Figure 11. Since the UDP has a simple format as described above, overheads decrease and control is simplified.

As described above, the UDP is designed such that data can be transmitted/received with a minimum number of overheads. For this reason, the UDP has only simple information about four fields and does not include additional information about a field for identifying a packet sequence similar to TCP. Accordingly, although the host CPU 30 basically processes both TCP/IP packet and UDP/IP packet, the network I/F card 100 according to the present invention processes only the UDP/IP packet, which can be processed with a relatively simple manner, because the network I/F card 100 has processing power lower than that of the host CPU 30.

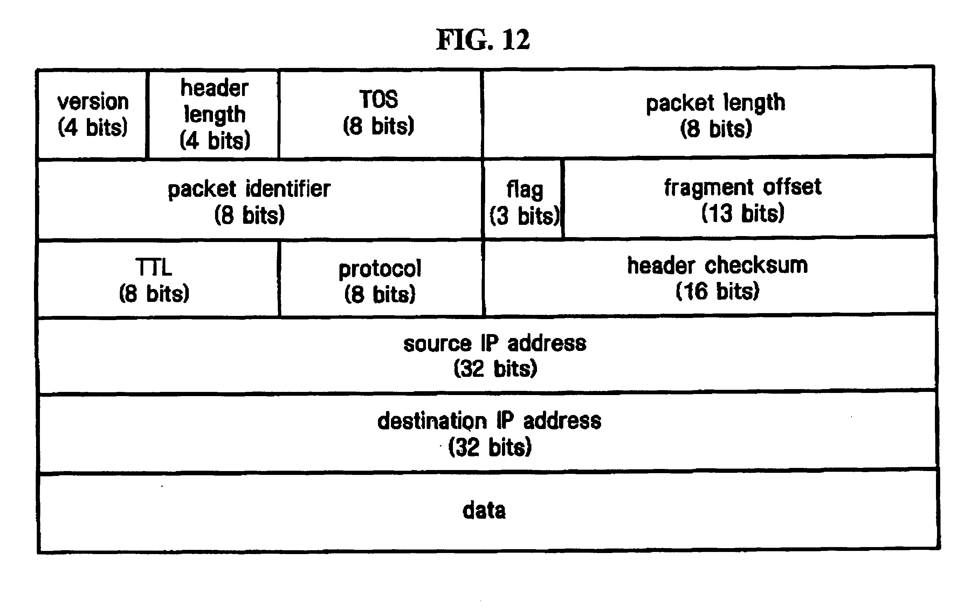

An IP header attaching unit 141 attaches an IP header shown in Figure 12 to data delivered from the UDP header attaching unit 140. Each field of the IP header has a meaning according to a definition of the IP header. Figure 12 is a view showing a structure of an IP header format in detail.

The IP header includes a version field representing versions such as IPv4 and IPv6, a header length field representing the length of the IP header, a type of service (TOS) field containing priority information, a packet length field, a packet identifier field, a flag field which is control information about data fragment in an IP layer, a fragmentation offset field representing a position of fragmented data, a time to live (TTL) field representing time information until data are destroyed, an upper protocol field representing protocols such as TCP, UDP, etc., to be used in an upper layer, a header checksum field for checking error of the IP header, and a source IP address field for recording an IP address of a source device, and a destination IP address field for recording an IP address of a destination device.

Herein, a source IP address is identical to a source IP address written in an IP packet by a host CPU. Also, the destination IP address field may have a unicast address, a multicast address, or a broadcast address.

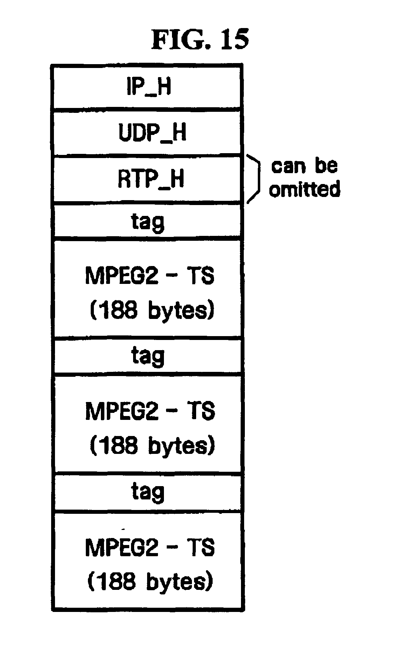

A multiplexer 134 selects one of plural inputs. Herein, the inputs include data delivered from the aggregator 133 (see Figure 14) and data delivered from the IP header attaching unit 141 (see Figure 15). In the present application, "IP_H", "UDP_H", and "RTP_H" refer to the IP header, the UDP header, and the RTP header, respectively. Herein, the RTP_H can be omitted if the RTP protocol is not supported.

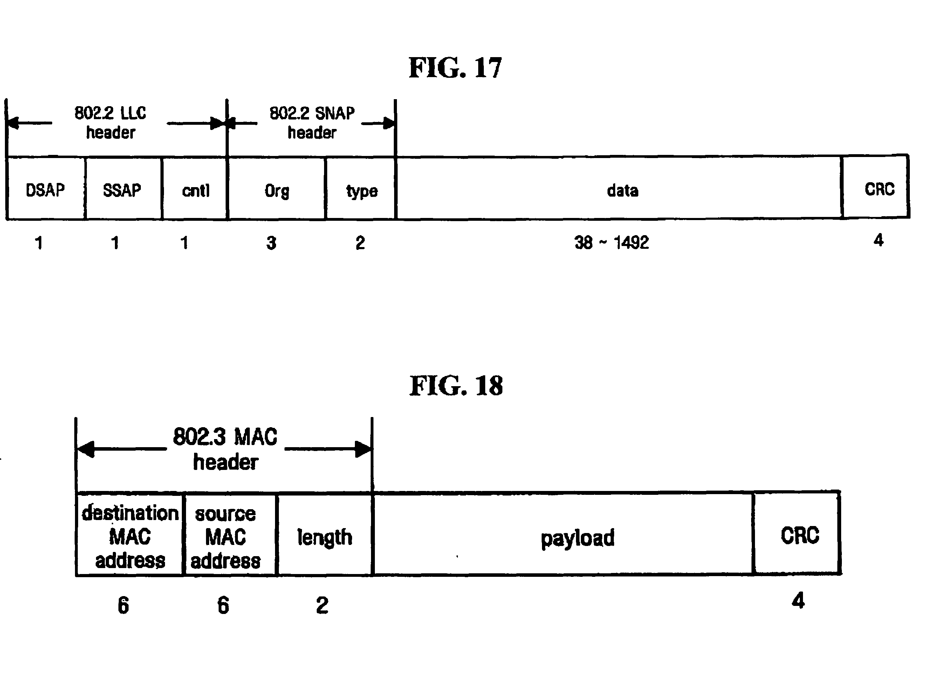

An LS header attaching unit 135 attaches a Logical Link Control (LLC) header and an SNAP header according to an IEEE 802.2 standard as shown in Figure 17. Two headers have a size of eight bytes. Also, the combined LLC and SNAP headers are called an "LS header".

According to the present invention, there are provided four cases according to types of data to be transferred, such as an IP packet and a non-IP packet, and according to the final delivery directions of a destination device, such as a host I/F direction and a stream I/F direction.

First, when an IP packet is transferred in a direction of the host I/F, each field value of the LS header is determined according to contents defined in an RFC 1042 (request for comments 1042) standard. Therefore, identically to IP packet transmission through a conventional technique, the LS header including "DSAP/SSAP/cntl/Org/type" field may have a value of "AA/AA/03/000000/0800". Herein, the "AA/AA" means that the IP packet must be output to a host I/F of a data reception device, and the "0800" refers to an IP packet of many kinds of packets.

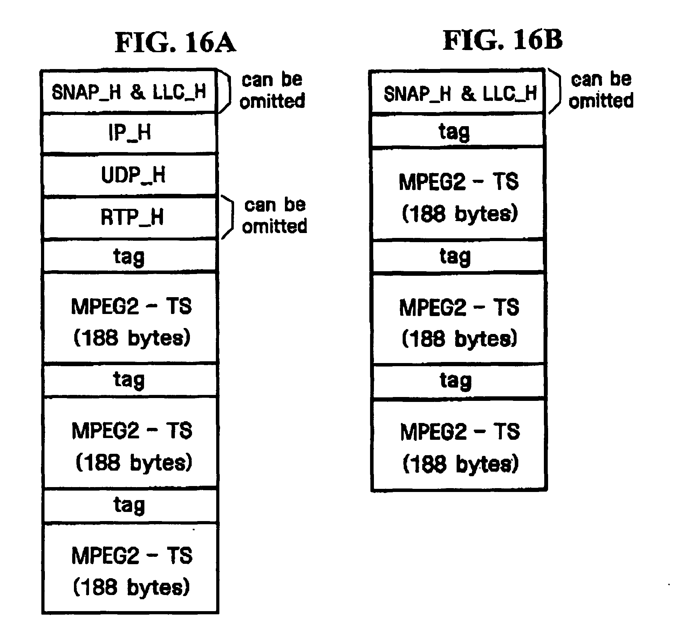

Secondly, when an IP packet is transferred in a direction of the stream I/F, values of the DSAP/SSAP field must be defined as new values replacing the "AA/AA". For example, the LS header "CC/CC/03/000000/0800" represents that the IP packet is transferred in the direction of the stream I/F while maintaining interoperability with regard to existing Internet protocols. Herein, when the LS header is attached to the IP packet, the combined packet has a format shown in Figure 16A.

Thirdly, when data to be delivered include a non-IP packet and the non-IP packet is transferred in the direction of the host I/F, the LS header is marked with "AA/AA/03/000001/f000", for example, so that the non-IP packet can maintain interoperability with regard to existing Internet protocols. Herein, the "f000" represents that the non-IP packet is transferred.

Finally, when it is necessary to transfer a non-IP packet in the direction of the stream I/F, the LS header is marked with "CC/CC/03/000000/f000" when transferring the non-IP packet in the direction of the stream I/F. Herein, when the LS header is attached to the non-IP packet, the combined packet has a format shown in Figure 16B.

In these cases, an IP packet is delivered without problems. However, when a non-IP packet is delivered between AV devices, a destination device is determined only by a MAC address (see Figure 18) because an IP address does not exist. Herein, it is premised that the AV devices know MAC addresses of their partner devices in advance.

However, the LS header attaching unit 135 can be bypassed if it is required by a user. In other words, the LLC header (LLC_H) and the SNAP header (SNAP_H) can be omitted. In a bypass mode in which the LLC header and the SNAP header are omitted, since it is difficult to know whether packets to be currently transferred are IP packets or non-IP packets, it is difficult to transfer each packet by designating the stream I/F or the host I/F to each packet. Accordingly, in the bypass mode, packets to be received by the destination device can be transferred only in the direction of the stream I/F or only in the direction of the host I/F according to intension of a user.

A buffer 136 temporarily stores data input thereto from the LS header attaching unit 135 or the multiplexer 134. The data temporarily stored in the buffer 136 are input as payload data of a MAC frame created in a MAC module 137. Also, the size of the buffer 136 is determined depending on characteristics of physical layers and a bit-rate of data input through the host I/F or the stream I/F. In addition, packets stored in the buffer 136 have formats shown in Figure 16A or 16B.

The MAC module 137 controls an operation required for creating a MAC frame in a MAC layer. Herein, as shown in FIG. 18, the MAC frame is formed by combining a MAC header with a payload formed by using data having the format shown in Figure 16A or 16B. The MAC header includes a destination MAC address field for recording a MAC address of an device receiving the MAC frame, a source MAC address field for recording a MAC address of an device transferring the MAC frame, and a length field.

A PHY module 138 controls an operation in a PHY layer. The PHY module 138 converts digital data of the MAC frame into analogue signals and transfers the analog signals to another device through a network, or, transmission media such as LAN cables, air, etc. Although the MAC layer and the PHY layer are defined such that they are formed according to a wired Ethernet of an IEEE 802.3 standard in the present invention, the present invention dose not limit the scope of the MAC layer and the PHY layer. That is, according to another exemplary embodiment of the present invention, a MAC layer and a PHY layer based on an IEEE 802.11x standard can be employed.

Meanwhile, when the AV device 200 transfers IP packets processed by the host CPU 30, the buffer 142 temporarily stores the IP packets delivered through the host I/F, and then, provides the IP packets to the MAC module 137. After that, the IP packets are transferred to a network through the MAC module 137 and the PHY module 138.

The AV device 200 having the data transmission module 130 and the data reception module 160 according to the present invention can output IP packets, which are input through the host I/F of the AV device, through the stream I/F of the AV device in the form of an MPEG2-TS. Also, the AV device 200 can output MPEG2-TSs, which are input through the stream I/F of the AV device, through the host I/F of the AV device in the form of an IP packet. As described above, according to the present invention, an operation of converting data between the host I/F and the stream I/F in one AV device 200 and transferring the converted data is called "loop-back".

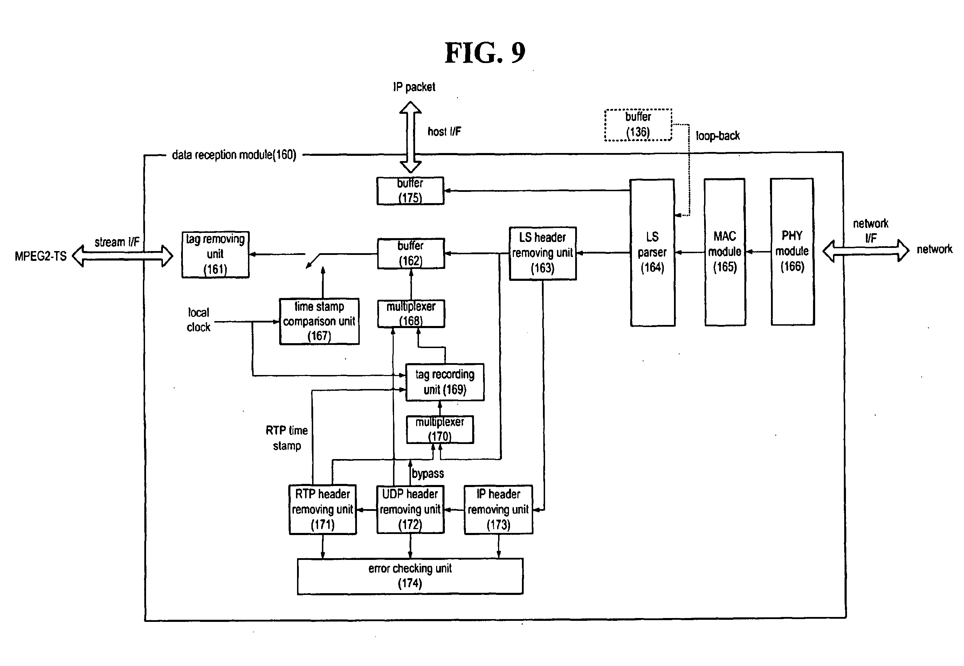

First, regarding loop-back from the host I/F to the stream I/F (hereinafter, simply referred to as "downlink loop-back"), IP packets input through the host I/F and stored in the buffer 142 are not input to the MAC module 137, but input to an LS parser 164 of the data reception module 160 through loop-back. After that, the IP packets are output as MPEG-TSs through the stream I/F after passing through predetermined blocks. Herein, a transmission of the IP packet passing through the predetermined blocks will be described with reference to Figure 9 showing an operation of the data reception module 160.

Next, regarding loop-back from the stream I/F to the host I/F (hereinafter, referred to as "uplink loop-back"), MPEG2-TSs input through the stream I/F pass through blocks of the data transmission module 130, and then, are input to the buffer 136 as described above. Data input to the buffer 136 can be input to the LS parser 164 of the data reception module 160 through loop-back, and then, can pass through the buffer 175 so as to be delivered to the host CPU 30 through the host I/F as a form of an IP packet.

Figure 9 is a block diagram representing a structure of the data reception module 160.

A PHY module 166 restores IP packets or non-IP packets contained in analog signals transferred from another device through a network I/F. In addition, a MAC module 165 removes MAC headers from the packets.

If packets, from which the MAC headers have been removed, have the LLC header and the SNAP header, the LC parser 164 reads the LLC header and the SNAP header so as to determine whether the packets are IP packets or non-IP packets and whether the packets will be delivered to the host I/F or to the stream I/F. If the LLC header has "AA/AA" as a value of the DSAP/SSAP field, the packets will be delivered to the host I/F. If the value of the DSAP/SSAP field is "CC/CC", the packets will be delivered to the stream I/F. Also, if the SNAP header has "0800" as a value of the type field, the packets are IP packets. If the value of the type field is "f000", the packets are non-IP packets.

As described above, packets to be delivered to the host I/F or the stream I/F can be determined by adjusting a value of the type field of each packet. If the LLC header and the SNAP header do not exist, packets may be sent to a previously designated position. In this case, the packets are sent to the host I/F, basically.

In addition, the LS parser 164 can receive transport data from the data transmission module 130 including the LS parser 164 through loop-back, as well as from the MAC module 165.

In detail, when the loop-back is performed, the LS parser 164 receives transport data from the buffer 136 of the data transmission module 130 so as to parse the LLC header and the SNAP header (whether a value of the DSAP/SSAP is "AA/AA" or "CC/CC"). As a result of the parsing, the LS parser 164 finds whether the transport data must be delivered to the host I/F (uplink loop-back) or to the stream I/F (downlink loop-back).

As described above, it is unnecessary for the LS parser 164 to know whether delivered data are received through a loop-back path or from another device through a network. That is, it is enough for the LS parser 164 to deliver the data in a direction of the host I/F or the stream I/F according to a delivery direction of the transferred data.

The LS header removing unit 163 removes the LLC header and the SNAP header from the data delivered from the LS parser 164, and then, sends data from which the LLC and SNAP headers have been removed to an IP header removing unit 173 if an IP header exists in the data without the LLC and SNAP headers. If the IP header does not exist, the LS header removing unit 163 determines whether a tag existing in the data without the LLC and SNAP headers has a "NULL" value. As a result of the determination, if the tag does not have the "NULL" value, the data are immediately stored in a buffer 162 because the tag, that is, a time stamp has been already recorded. If the tag has the "NULL" value, the data are delivered to a tag recording unit 169 through a multiplexer 170.

An IP header removing unit 173 reads data delivered from the LS header removing unit 163, that is, reads an IP header of an IP packet so as to check whether a destination IP address is an IP address of an device including the IP header removing unit 173. If the destination IP address is the IP address of the device, the IP header removing unit 173 removes the IP header from the data.

A UDP header removing unit 172 reads a UDP header of data from which the IP header has been removed (hereinafter, simply referred to as "IP payload") so as to check whether a destination port is a port of the UDP header removing unit 172. If the destination port is the port of the UDP header removing unit 172, the UDP header removing unit 172 removes the UDP header from the IP payload. Also, the UDP header removing unit 172 determines whether an RTP header exists in data from which the UDP header has been removed (hereinafter, referred to as "UDP payload"). If the RTP header exists in the UDP payload, the UDP payload is transferred to an RTP header removing unit 171. In a case in which the RTP header does not exist in the UDP payload, if a tag existing in the UDP payload is a "NULL" value, the UDP payload is transferred to the tag recording unit 169 through the multiplexer 170. If the tag existing in the UDP payload has no "NULL" value, the UDP payload is transferred to the buffer 162 through a multiplexer 168.

The RTP header removing unit 171 removes the RTP header of a specific size from the UDP payload and delivers data, from which the RTP header has been removed, to the tag recording unit 169 through the multiplexer 170. At this time, an RTP time stamp of the RTP header (see Figure 10) is delivered to the tag recording unit 169.

An error checking unit 174 receives error information from the IP header removing unit 173, the UDP header removing unit 172, and the RTP header removing unit so as to check whether errors exist in the IP header removing unit 173, the UDP header removing unit 172, and the RTP header removing unit. If the IP header removing unit 173, the UDP header removing unit 172, and the RTP header removing unit contains errors, the error checking unit 174 may remove data corresponding to the errors, or transfer the data regardless of the errors. Such error information includes sequence numbers, a UDP checksum, and an IP header checksum.

The tag recording unit 169 attaches a required tag to data having a tag of "NULL" in a predetermined-byte unit. For example, in a case of an MPEG2-TS, the tag recording unit 169 attaches a required tag to the MPEG2-TS every 188-byte unit. Herein, various algorithms can be used for creating a tag. In exemplary embodiments of the present invention, three algorithms will be described as examples.

First, a time value corresponding to bytes of a packet to be tagged is calculated by calculating an input bit-rate on the basis of a local clock so as to use the time value for a tag. For example, if the bytes of the packet to be tagged are 188 bytes, the tag is created every 188-byte unit by converting a bit-rate input on the basis of a local clock into a clock of 27 MHz and adding an increment value to every 188-byte unit.

Secondly, if received data have reference clock information, time information of the tag is created in the tag by detecting the reference clock information and uniformly distributing time with regard to data included in a period of the reference clock.

Thirdly, an RTP time stamp (referring to Figure 10) included in the RTP header and delivered from the RTP header removing unit 171 can be utilized. In this case, a bit-rate input on the basis of a reference clock of the RTP time stamp is calculated and represented as a time stamp reference clock of a tag, thereby creating the tag. Such algorithms can be automatically selected by a user or through a default value.

Then, data having the tag recorded by the tag recording unit 169 are delivered to and stored in the buffer 162 through the multiplexer 168.

A time stamp comparison unit 167 has a count value increased as the time stamp comparison unit 167 receives a local clock and can be initialized with a time stamp value provided from an external device at a first stage. Also, the count value is compared with a tag value stored in the buffer 162 and is transferred to the tag removing unit 161 at a point of time in which the count value is equal to the tag value.

The tag removing unit 161 removes a tag from data stored in the buffer and outputs the data, from which the tag has been removed, that is, the MPEG2-TS, in correspondence with an output form of the stream I/F.

In the present application, components shown in Figures 7 and 9 means software or hardware such as FPGA or ASIC, and perform predetermined functions. However, the components are not limited to software or hardware. The components can be formed such that the components are stored in addressable recording media. Also, the components can be formed such that one or more than processes are executed. For example, the components include software components, object-oriented software components, class components, task components, processes, functions, attributes, procedures, subroutines, segments of program codes, drivers, firm ware, micro-code, circuits, data, databases, data formats, tables, arrays, and variables. In addition, functions provided by the above components can be achieved with a smaller number of components by combining components with each other, or can be achieved with a larger number of components by dividing the components.

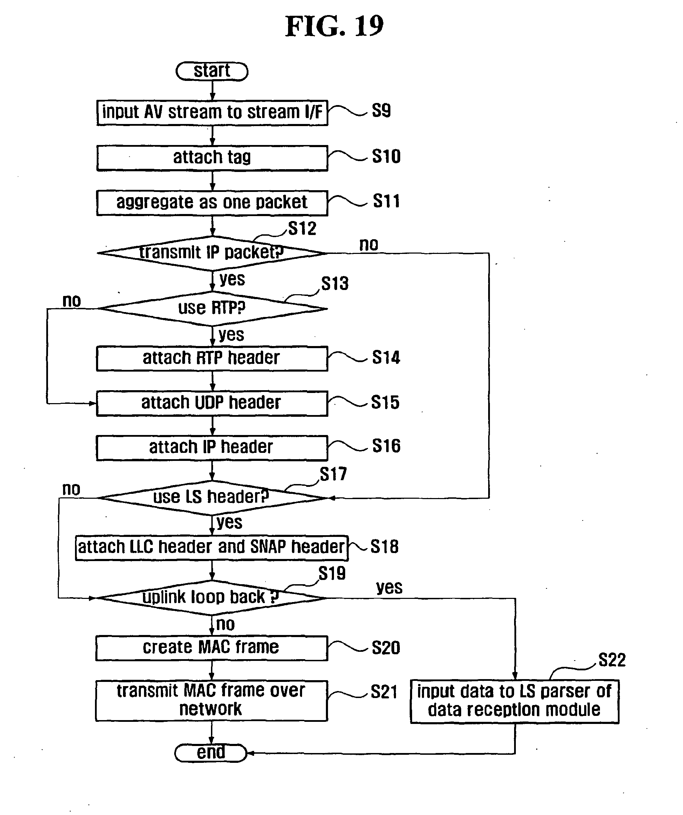

Figure 19 is a flowchart representing an operation of the data transmission module 130 of the network I/F card 100.

First, AV streams are input to the stream I/F in operation S9. The tag generating unit 131 adds information of tags for recording time information of the AV streams to the AV streams in operation S10. The information of the tags has count values using clocks or "NULL".

The aggregator 133 aggregates a predetermined amount of the AV stream data so as to form one packet in operation S11. Also, the aggregator 133 determines whether the packet is transferred in the form of an IP packet or in the form of a non-IP packet in operation S12. If it is determined that the packet is transferred in the form of the non-IP packet, operation S17 is performed.

In a case in which the packet is transferred in the form of the IP packet, if the RTP is employed ("yes" in operation S13), an RTP header is attached to the packet by means of the RTP header attaching unit 139 in operation S14. Then, a UDP header is attached to the packet having the RTP header by means of the UDP header attaching unit 149 in operation S15. After that, an IP header is attached to the packet having the UDP header and the RTP header by means of the IP header attaching unit 141 in operation S16.

Then, if an LS header is employed ("yes" in operation S17), an LLS header and a SNAP header are attached to the IP packet by means of the LS header attaching unit 135 in operation S18. Then, it is determined whether the uplink loop-back is performed in operation 519. If the LS header is not employed ("no" in operation S17), operation S19 is performed.

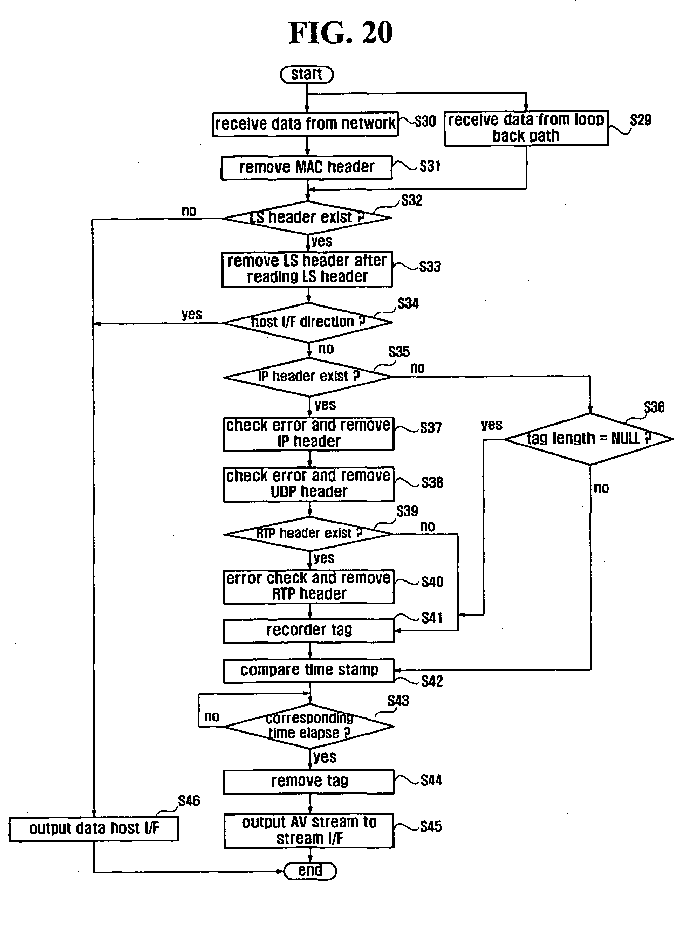

If the uplink loop-back is performed ("yes" in operation 519), data formed in operation S11, data formed in operation S16, or data formed in operation S18 are input to the LS parser 164 of the data reception module 160 according to the flowchart in operation S22. Herein, the procedure performed after the data are input to the LS parser 164 is identical to the procedure performed after operation S32 shown in Figure 20.

If the uplink loop-back is not performed ("no" in operation S19), a MAC frame is formed by means of the MAC module 137 in operation S20, and the formed MAC frame is transferred to a network by means of the PHY module 138 in operation S21.

Figure 20 is a flowchart representing an operation of the data reception module 160 of the network I/F card 100.

First, an operation of the data reception module 160 starts from a procedure for receiving data from the network in operation S30 or a procedure for receiving data from the data transmission module 130 through the loop-back in operation S29. If the operation of the data reception module 160 starts from operation S29, operation S31 is immediately performed.

If the operation of the data reception module 160 starts from operation S30, the MAC header is removed by means of the MAC module 165 in operation S31. Then, if the LS header does not exist ("no" in operation S32), data without the MAC header are output to the host I/F in operation S46.

If the LS header exists ("yes in operation S32), the LS parser 164 reads the LS header, and then, the LS header removing unit 163 removes the LS header in operation S33. After reading the LS header, if the data are transmitted in the direction of the stream I/F ("no" in operation S34), operation S46 is performed.

After reading the LS header, if the data are transmitted in the direction of the host I/F ("yes" in operation S34), it is determined that the IP header exists in operation S35. If the IP header does not exist ("no" in operation S35), it is determined that a value of a tag is "NULL" in operation S36. If the value of the tag is "NULL", operation S41 is performed because a new tag must be created and recorded. However, if the value of the tag is not "NULL", operation S42 is performed because a time stamp already exists.

As a result of the determination in operation S35, if the IP header exists ("yes" in operation S35), the error checking unit 174 checks errors for the IP packet in operation S37. If there are no errors, the IP header is removed from the IP packet in operation S37. Also, the error checking unit 174 checks errors for data without the IP header. If there are no errors in the data without the IP header, the UDP header is removed from the data without the IP header in operation S38.

In addition, it is determined whether the RTP header exists in data without the UDP header in operation S39. If the RTP header exists ("yes" in operation S39), the RTP header is removed from the data without the UDP header after reading the RTP header in operation S40. Also, the tag recording unit 169 records a predetermined time stamp in operation S41. If the RTP header does not exist ("no" in operation S39), operation S41 is immediately performed.

Also, a time stamp value recorded by the tag recording unit 169 or a time stamp value having been originally recorded in a tag is read, and then, compared with time through a local clock in operation S42. If the time stamp value is identical to the time ("yes" in operation S43), the time stamp, that is, the tag is removed in operation S44, and an AV stream without the tag is output to the stream I/F in operation S45.

As described above, according to the present invention, IP network devices can be more efficiently connected to non-IP network devices, and, particularly, home digital devices according to DHWG can be more simply and economically embodied by allowing the network I/F card to support a variety of protocols and interfaces.

Also, according to the present invention, it is possible to efficiently use system resources of devices by processing IP packets and AV streams without utilizing an additional host CPU in a network I/F.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A network interface card (100) comprising:
a host interface (102) connected to a communication bus (20) linked with a host central processor unit (CPU) (130);
a stream interface (101) connected to an audio or video (AV) decoder/encoder (10);
a network interface (103) connected to a network; and
a data reception module (160);
**characterised in that:**
the data reception module (160) comprises:
a parser (164) arranged to read a predetermined header in order to determine a type and a transmission direction of an input packet received from the network interface,
a header removing unit (163) arranged to remove the predetermined header from the input packet,
a tag recording unit (169) arranged to create a tag for recording time information for every predetermined number of bytes within the packet if the packet, from which the predetermined header is removed, has no tag and to attache the tag to the predetermined number of bytes within the packet, and
a tag removing unit (161) arranged to remove the tag existing in the packet by receiving the packet, from which the predetermined header is removed, at a time corresponding to the time information in order to create AV stream units and to output the AV stream units through the stream interface (101).

2. The network interface card (100) as claimed in claim 1, wherein, in order to process the input packet if the type of the input packet is an Internet Protocol (IP) packet, the data reception module (160) further comprises:
an IP header removing unit (173) arranged to remove an IP header from the packet, and
a User Datagram Protocol (UDP) header removing unit (172) arranged to remove a UDP header from the packet, from which the IP packet header is removed, so as to provide the packet to the tag recording unit (169).

3. The network interface card (100) as claimed in claim 1, wherein, in order to process the input packet when the type of the input packet is an Internet Protocol (IP) packet, the data reception module (160) further comprises:
an IP header removing unit (173) arranged to remove an IP header from the packet,
a User Datagram Protocol (UDP) header removing unit (172) arranged to remove a UDP header from the packet, from which the IP header is removed, and
a Real-Time Transport Protocol (RTP) header removing unit (171) arranged to remove an RTP header from the packet, from which the UDP header is removed, so as to provide the packet to the tag recording unit (169).

4. The network interface card (100) as claimed in claim 1, 2 or 3, wherein the tag is created by using a time value corresponding to the predetermined number of bytes within the packet to be tagged, which is calculated by computing an input bit-rate on a basis of a local clock.

5. The network interface card (100) as claimed in any of claims 1 to 4, wherein, in order to create the tag, if the packet having no predetermined header has information about a reference clock, time information is created in the tag by detecting the reference clock and uniformly distributing time with regard to data included in a period of the reference clock.

6. The network interface card (100) as claimed in claim 3, 4 or 5, wherein a bit-rate input on a basis of a reference clock of an RTP time stamp, which is delivered from the RTP header removing unit (171) and included in the RTP header, is calculated and represented as a time stamp reference clock of a tag, thereby creating each tag.

7. The network interface card (100) of any preceding claim, further comprising a data transmission module (130), wherein the data transmission module (130) comprises:
a tag generating unit (131) which generates a tag for recording time information of AV stream units, and adds the tag to the AV stream units input through the stream interface (102);
an aggregator (133) which aggregates a predetermined amount of the AV stream units, in which tag information is generated, in order to form a packet; and
a header attaching unit (139) which generates a predetermined header including information regarding a type of a packet to be transferred and a transmission direction of the packet, and adds the predetermined header to the packet.

8. The network interface card (100) as claimed in claim 7, wherein, in order to convert the AV streams into an Internet Protocol (IP) packet, the data transmission module (130) further comprises:
a User Datagram Protocol (UDP) header attaching unit (140) arranged to attach a UDP header to the packet, and
an IP header attaching unit (141) for which attaches an IP header to the packet to which the UDP header is attached, and provides the packet to which the IP header is attached to the header attaching unit (139).

9. The network interface card (100) as claimed in claim 7 or 8, wherein the type of the packet is marked by using a type field of a Sub-Net Access Protocol (SNAP) header, and the transmission direction of the packet is marked by using a Destination Service Access Point (DSAP) field and the Source Service Access Point (SSAP) field of a Logical Link Control (LLC) header.

10. The network interface card (100) as claimed in any of claims 7 to 9, wherein the transmission direction is divided into a direction of the host interface (102) and a direction of the stream interface (101).

11. The network interface card (100) as claimed in any of claims 7 to 10, wherein the tag is recorded as a count value using a predetermined clock provided by a clock generating unit.

12. A data reception method in a network interface card, the reception method comprising:
(a) reading a predetermined header and determining a type of an input packet and a transmission direction of the input packet reveived from the network interface;
(b) removing the predetermined header from the input packet;
(c) outputting the packet, in which the predetermined header is removed, through a host interface (102) if the transmission direction of the packet is identical to a direction of the host interface;
**characterised by:**
(d) creating a tag for recording time information for every predetermined number of bytes within the packet if the packet, in which the predetermined header is removed, has no tag and adding the tag to the predetermined number of bytes within the packet; and
(e) creating audio or video (AV) streams by receiving the packet, in which the header is removed, at a time corresponding to the tag and removing a tag existing in the packet and outputting the AV stream units through a stream interface (101).

13. The data reception method as claimed in claim 12, further comprising removing an Internet Protocol (IP) header and a User Datagram Protocol (UDP) header from the packet, from which the predetermined header is removed, if the transmission direction of the packet is identical to a direction of the stream interface (101) and the IP header exists in the packet.

14. A data transmission method in a network interface card comprising
(a) generating tag recording time information and attaching the tag to an audio or video (AV) stream unit input to a stream interface (101);
(b) forming one packet from a predetermined amount of AV stream units having tag information;
(c) attaching a User Datagram Protocol (UDP) header and an Internet Protocol (IP) header to the packet when the AV stream units are transferred while being converted into an IP packet **characterized by** ;
(d) creating a predetermined LS header, comprising a Link Layer Control (LLC) header and a Sub-Network Access Protocol (SNAP) header, including information regarding a type of a packet to be transferred and a transmission direction of the packet and adding the predetermined LS header to the packet; and
(e) forming a Media Access Control (MAC) frame by adding a MAC header to the packet, to which the predetermined header is added, and transferring the MAC frame on a network.

## Patentansprüche

1. Netzschnittstellenkarte (100), umfassend:
eine Hostschnittstelle (102), die mit einem Kommunikationsbus (20) verbunden ist, der an eine Hostzentralprozessoreinheit (ZE) (130) angebunden ist;
eine Streamingschnittstelle (101), die mit einem Audio- oder Video-(AV)-Decodierer/Codierer (10) verbunden ist;
eine Netzschnittstelle (103), die mit einem Netz verbunden ist; und
ein Datenempfangsmodul (160);
**dadurch gekennzeichnet, dass:**
das Datenempfangsmodul (160) umfasst:
einen Parser (164), der ausgelegt ist, um einen im Voraus bestimmten Header zu lesen, um einen Typ und eine Übertragungsrichtung eines von der Netzschnittstelle empfangenen eingegebenen Pakets zu bestimmen,
eine Header-Entfernungseinheit (163), die ausgelegt ist, um den im Voraus bestimmten Header aus dem eingegebenen Paket zu entfernen,
eine Tagaufzeichnungseinheit (169), die ausgelegt ist, um ein Tag zum Aufzeichnen von Zeitinformationen für jede im Voraus bestimmte Zahl von Bytes innerhalb des Pakets zu erzeugen, falls das Paket, aus dem der im Voraus bestimmte Header entfernt wurde, kein Tag aufweist, und um das Tag an die im Voraus bestimmte Zahl von Bytes innerhalb des Pakets anzufügen, und
eine Tagentfernungseinheit (161), die ausgelegt ist, um das in dem Paket existierende Tag zu entfernen, indem das Paket, aus dem der im Voraus bestimmte Header entfernt wurde, zu einer Zeit empfangen wird, die mit den Zeitinformationen korrespondiert, um AV-Streameinheiten zu erzeugen und um die AV-Streameinheiten durch die Streamschnittstelle (101) auszugeben.

2. Netzschnittstellenkarte (100) nach Anspruch 1, wobei, um das eingegebene Paket zu verarbeiten, falls der Typ des eingegebenen Pakets ein Internetprotokoll-(IP)-Paket ist, das Datenempfangsmodul (160) weiter umfasst:
eine IP-Header-Entfernungseinheit (173), die ausgelegt ist, um einen IP-Header aus dem Paket zu entfernen, und
eine UDP-(User Datagram Protocol)-Header-Entfernungseinheit (172), die ausgelegt ist, um einen UDP-Header aus dem Paket, aus dem der IP-Paketheader entfernt wurde, zu entfernen, um das Paket der Tagaufzeichnungseinheit (169) bereitzustellen.

3. Netzschnittstellenkarte (100) nach Anspruch 1, wobei, um das eingegebene Paket zu verarbeiten, wenn der Typ des eingegebenen Pakets ein Internetprotokoll-(IP)-Paket ist, das Datenempfangsmodul (160) weiter umfasst:
eine IP-Header-Entfernungseinheit (173), die ausgelegt ist, um einen IP-Header aus dem Paket zu entfernen,
eine UDP-Header-Entfernungseinheit (172), die ausgelegt ist, um einen UDP-Header aus dem Paket, aus dem der IP-Paketheader entfernt wurde, zu entfernen, und
eine Real-Time Transport Protocol-(RTP)-Header-Entfernungseinheit (171), die ausgelegt ist, um einen RTP-Header aus dem Paket, aus dem der UDP-Header entfernt wurde, zu entfernen, um das Paket der Tagaufzeichnungseinheit (169) bereitzustellen.

4. Netzschnittstellenkarte (100) nach Anspruch 1, 2 oder 3, wobei das Tag erzeugt wird, indem ein Zeitwert verwendet wird, der mit der im Voraus bestimmten Zahl von Bytes innerhalb des zu taggenden Pakets korrespondiert, die durch Berechnung einer Eingabe-Bitrate auf einer Basis eines lokalen Takts berechnet wird.

5. Netzschnittstellenkarte (100) nach einem der Ansprüche 1 bis 4, wobei, um das Tag zu erzeugen, falls das Paket, das keinen im Voraus bestimmten Header aufweist, Informationen über einen Referenztakt aufweist, Zeitinformationen in dem Tag erzeugt werden, indem der Referenztakt detektiert wird und Zeit in Bezug auf Daten, die in einer Periode des Referenztakts enthalten sind, gleichmäßig verteilt werden.

6. Netzschnittstellenkarte (100) nach Anspruch 3, 4 oder 5, wobei eine Bitrate, die auf einer Basis eines Referenztakts eines RTP-2eitstempels, der von der RTP-Header-Entfernungseinheit (171) zugeführt wird und in dem RTP-Header enthalten ist, eingegeben wird, als ein Zeitstempel-Referenztakt eines Tags berechnet und repräsentiert wird, wodurch jedes Tag erzeugt wird.

7. Netzschnittstellenkarte (100) nach einem vorstehenden Anspruch, weiter umfassend ein Datenübertragungsmodul (130), wobei das Datenübertragungsmodul (130) umfasst:
eine Tagerzeugungseinheit (131), die ein Tag zum Aufzeichnen von Zeitinformationen von AV-Streameinheiten erzeugt und die Markierung den durch die Streamschnittstelle (101) eingegebenen AV-Streameinheiten hinzufügt;
einen Aggregator (133), der eine im Voraus bestimmte Menge der AV-Streameinheiten, in denen Taginformationen erzeugt werden, aggregiert, um ein Paket zu bilden; und
eine Headeranfügungseinheit (139), die einen im Voraus bestimmten Header erzeugt, der Informationen hinsichtlich eines Typs eines Pakets, das zu übertragen ist, und einer Übertragungsrichtung des Pakets enthält, und den im Voraus bestimmten Header zu dem Paket hinzufügt.

8. Netzschnittstellenkarte (100) nach Anspruch 7, wobei, um die AV-Streams in ein Internetprotokoll-(IP)-Paket umzuwandeln, das Datenübertragungsmodul (130) weiter umfasst:
eine UDP-Header-Anfügungseinheit (140), die ausgelegt ist, um einen UDP-Header an das Paket anzufügen, und
eine IP-Header-Anfügungseinheit (141), die einen IP-Header an das Paket anfügt, an das der UDP-Header angefügt wurde, und das Paket, an das der IP-Header angefügt wurde, der Headeranfügungseinheit (139) bereitstellt.

9. Netzschnittstellenkarte (100) nach Anspruch 7 oder 8, wobei der Typ des Pakets durch Verwendung eines Typenfelds eines SNAP-Headers markiert wird und die Übertragungsrichtung des Pakets durch Verwendung eines (Sub-Net Access Protocol) DSAP-Felds (Destination Service Access Point) und des Ausgangsdienstzugangspunkt-(SSAP)-Felds eines LLC-Headers (Logical Link Control) markiert wird.

10. Netzschnittstellenkarte (100) nach einem der Ansprüche 7 bis 9, wobei die Übertragungsrichtung in eine Richtung der Hostschnittstelle (102) und eine Richtung der Streamschnittstelle (101) aufgeteilt ist.

11. Netzschnittstellenkarte (100) nach einem der Ansprüche 7 bis 10, wobei das Tag als ein Zählwert unter Verwendung eines im Voraus bestimmten Takts, der von einer Takterzeugungseinheit bereitstellt wird, aufgezeichnet wird.

12. Datenempfangsverfahren in einer Netzschnittstellenkarte, wobei das Empfangsverfahren Folgendes umfasst:
(a) Lesen eines im Voraus bestimmten Headers und Bestimmen eines Typs eines eingegebenen Pakets und einer Übertragungsrichtung des von der Netzschnittstelle empfangenen eingegebenen Pakets;
(b) Entfernen des im Voraus bestimmten Headers aus dem eingegebenen Paket;
(c) Ausgeben des Pakets, in dem der im Voraus bestimmte Header entfernt wurde, durch eine Hostschnittstelle (102), falls die Übertragungsrichtung des Pakets mit einer Richtung der Hostschnittstelle identisch ist;
**gekennzeichnet durch:**
(d) Erzeugen eines Tags zum Aufzeichnen von Zeitinformationen für jede im Voraus bestimmte Zahl von Bytes innerhalb des Pakets, falls das Paket, in dem der im Voraus bestimmte Header entfernt wurde, kein Tag aufweist, und Hinzufügen des Tags zu der im Voraus bestimmten Zahl von Bytes innerhalb des Pakets; und
(e) Erzeugen von Audio- oder Video-(AV)-Streams durch Empfangen des Pakets, in dem der Header entfernt wurde, zu einer Zeit, die mit dem Tag korrespondiert, und Entfernen eines Tags, das in dem Paket existiert, und Ausgeben der AV-Streameinheiten **durch** eine Streamschnittstelle (101).

13. Datenempfangsverfahren nach Anspruch 12, weiter umfassend, einen Internetprotokoll-(IP)-Header und einen UDP-Header aus dem Paket, aus dem der im Voraus bestimmte Header entfernt wurde, zu entfernen, falls die Übertragungsrichtung des Pakets mit einer Richtung der Streamschnittstelle (101) identisch ist und der IP-Header in dem Paket existiert.

14. Datenübertragungsverfahren in einer Netzschnittstellenkarte, umfassend
(a) Erzeugen von Tagaufzeichnungs-Zeitinformationen und Anfügen des Tags an eine in eine Streamschnittstelle (101) eingegebene Audio- oder Video-(AV)-Streameinheit;
(b) Bildes eines Pakets aus einer im Voraus bestimmten Menge von AV-Streameinheiten, die Taginformationen aufweisen;
(c) Anfügen eines UDP-Headers und eines Internetprotokoll-(IP)-Headers an das Paket, wenn die AV-Streameinheiten während der Umwandlung in ein IP-Paket übertragen werden; **gekennzeichnet durch**:
(d) Erzeugen eines im Voraus bestimmten LS-Headers, umfassend einen LLC-Header (Link Layer Control) und einen SNAP-Header, der Informationen hinsichtlich eines Typs eines Pakets, das zu übertragen ist, und einer Übertragungsrichtung des Pakets enthält, und Hinzufügen des im Voraus bestimmten LS-Headers zu dem Paket; und
(e) Bilden eines MAC-Rahmens (Media Access Control) **durch** Hinzufügen eines MAC-Headers zu dem Paket, zu dem der im Voraus bestimmte Header hinzugefügt wurde, und Übertragen des MAC-Rahmens in einem Netz.

## Revendications

1. Carte interface de réseau (100) comprenant :
une interface hôte (102) reliée à un bus de communication (20) lié à une unité centrale de traitement hôte (UC) (130),
une interface de diffusion en continu (101) reliée à un décodeur ou à un codeur (10) audio ou vidéo (AV),
une interface réseau (103) reliée à un réseau, et
un module de réception de données (160),
**caractérisée en ce que**
le module de réception de données (160) comprend :
un analyseur (164) agencé pour lire un en-tête prédéterminé afin de définir le type et la direction de transmission d'un paquet en entrée reçu en provenance de l'interface réseau,
une unité de suppression d'en-tête (163) agencée pour supprimer l'en-tête prédéfini du paquet en entrée,
une unité d'enregistrement d'étiquette (169) agencée pour créer une étiquette destinée à enregistrer des informations de temps pour chaque nombre prédéterminé d'octets à l'intérieur du paquet si le paquet, à partir duquel l'en-tête prédéterminé est supprimé, ne possède pas d'étiquette et pour attacher l'étiquette au nombre prédéterminé d'octets dans le paquet, et
une unité de suppression d'étiquette (161) agencée pour supprimer l'étiquette se trouvant dans le paquet en recevant le paquet, à partir duquel a été éliminé l'en-tête prédéterminé à un instant correspondant aux informations sur le temps dans le but de créer des unités de flux AV (audio vidéo) de diffusion en continu et de fournir en sortie les unités de flux AV (audio vidéo) de diffusion en continu par l'intermédiaire de l'interface de diffusion en continu (101).

2. Carte interface de réseau (100) selon la revendication 1, dans laquelle, afin de traiter le paquet en entrée, si le type du paquet en entrée est un paquet au protocole Internet (IP), le module de réception de données (160) comprend en outre :
une unité de suppression d'en-tête au protocole IP (173) agencée pour supprimer du paquet un en-tête au protocole IP, et
une unité de suppression d'en-tête au protocole de datagramme utilisateur (UDP) (172) agencée pour supprimer du paquet un en-tête au protocole UDP à partir duquel est supprimé l'en-tête de paquet au protocole IP, de façon à fournir le paquet à l'unité d'enregistrement d'étiquette (169).

3. Carte interface de réseau (100) selon la revendication 1, dans laquelle, afin de traiter le paquet en entrée lorsque le type de paquet en entrée est un paquet au protocole Internet (IP), le module de réception de données (160) comprend en outre :
une unité de suppression d'en-tête au protocole IP (173) agencée pour supprimer du paquet un en-tête au protocole IP,
une unité de suppression d'en-tête (172) au protocole de datagramme utilisateur (UDP) agencée pour supprimer du paquet un en-tête au protocole UDP à partir duquel l'en-tête au protocole IP est supprimé, et
une unité (171) de suppression d'en-tête au protocole de transport en temps réel (RTP) agencée pour supprimer du paquet un en-tête au protocole RTP à partir duquel l'en-tête au protocole UDP est supprimé, de façon à fournir le paquet à l'unité d'enregistrement d'étiquette (169).

4. Carte interface de réseau (100) selon la revendication 1, 2 ou 3, dans laquelle l'étiquette est créée en utilisant une valeur de temps correspondant au nombre prédéterminé d'octets à étiqueter dans le paquet, lequel est calculé en traitant un débit binaire d'entrée sur la base d'une horloge locale.

5. Carte interface de réseau (100) selon l'une quelconque des revendications 1 à 4, dans laquelle, afin de créer l'étiquette, si le paquet ne comportant aucun en-tête prédéterminé comporte des informations sur une horloge de référence, des informations sur le temps sont créées dans l'étiquette en détectant l'horloge de référence et en répartissant uniformément le temps par rapport aux données incluses dans une période de l'horloge de référence.

6. Carte interface de réseau (100) selon la revendication 3, 4 ou 5, dans laquelle l'entrée d'un débit binaire sur la base de l'horloge de référence d'horodatage au protocole RTP, laquelle est délivrée à partir de l'unité de suppression d'en-tête au protocole RTP (171) et incluse dans l'en-tête au protocole RTP, est calculée et représentée comme l'horloge de référence d'horodatage d'une étiquette, ce qui crée ainsi chaque étiquette.

7. Carte interface de réseau (100) selon l'une quelconque des revendications précédentes, comprenant en outre un module de transmission de données (130) dans laquelle le module de transmission de données (130) comprend :
une unité de génération d'étiquette (131) qui génère une étiquette pour enregistrer des informations sur le temps d'unités de flux AV de diffusion en continu et qui ajoute l'étiquette aux unités de flux AV de diffusion en continu reçues en entrée par l'intermédiaire de l'interface de diffusion en continu (101),
un dispositif de regroupement (133) qui groupe une quantité prédéterminée des unités de flux AV de diffusion en continu dans lesquelles les informations d'étiquette sont générées afin de former un paquet, et
une unité d'attachement d'en-tête (139) qui génère un en-tête prédéterminé incluant des informations se rapportant au type d'un paquet à transférer ainsi qu'à la direction de transmission du paquet, et qui ajoute l'en-tête prédéterminé au paquet.

8. Carte interface de réseau (100) selon la revendication 7, dans laquelle, afin de convertir les flux AV de diffusion en continu en un paquet au protocole Internet (IP), le module de transmission de données (130) comprend en outre :
une unité d'attachement d'en-tête au protocole de datagramme utilisateur (UDP) (140) agencée pour attacher un en-tête au protocole UDP au paquet, et
une unité d'attachement d'en-tête au protocole IP (141) qui attache un en-tête au protocole IP au paquet auquel est attaché l'en-tête au protocole UDP, et qui fournit le paquet auquel est attaché l'en-tête au protocole IP à l'unité d'attachement d'en-tête (139).

9. Carte interface de réseau (100) selon la revendication 7 ou 8, dans laquelle le type du paquet est marqué en utilisant un champ de type d'un en-tête au protocole d'accès à un sous-réseau (SNAP), et la direction de transmission du paquet est marquée en utilisant un champ de point d'accès de service de destination (DSAP) et le champ de point d'accès de service source (SSAP) d'un en-tête de commande de liaison logique (LLC).

10. Carte interface de réseau (100) selon l'une quelconque des revendications 7 à 9, dans laquelle la direction de transmission est divisée en une direction de l'interface hôte (102) et une direction de l'interface de la diffusion en continu (101).

11. Carte interface de réseau (100) selon l'une quelconque des revendications 7 à 10, dans laquelle l'étiquette est enregistrée comme une valeur de comptage qui utilise une horloge prédéterminée fournie par une unité de génération d'horloge.

12. Procédé de réception de données dans une carte interface de réseau, le procédé de réception comprenant :
(a) la lecture d'un en-tête prédéterminé et la détermination du type d'un paquet en entrée ainsi que de la direction de transmission du paquet en entrée reçu à partir de l'interface réseau,
(b) la suppression de l'en-tête prédéterminé du paquet en entrée,
(c) la fourniture en sortie du paquet, l'en-tête prédéterminé étant supprimé, par l'intermédiaire d'une interface hôte (102) si la direction de transmission du paquet est identique à la direction de l'interface hôte,
**caractérisé par :**
(d) la création d'une étiquette permettant d'enregistrer des informations de temps pour chaque nombre prédéfini d'octets à l'intérieur du paquet si le paquet, dans lequel l'en-tête prédéterminé est supprimé, ne possède aucune étiquette, ainsi que l'ajout de l'étiquette au nombre prédéfini d'octets à l'intérieur du paquet, et
(e) la création de flux de diffusion en continu audio ou vidéo (AV) en recevant le paquet, dans lequel est supprimé l'en-tête, à un instant correspondant à l'étiquette, ainsi que la suppression d'une étiquette se trouvant dans le paquet et la fourniture en sortie d'unités de flux de diffusion en continu AV (audio vidéo) par l'intermédiaire d'une interface de diffusion en continu (101).

13. Procédé de réception de données selon la revendication 12, comprenant en outre la suppression d'un en-tête au protocole Internet (IP) et d'un en-tête au protocole de datagramme utilisateur (UDP) du paquet à partir duquel l'en-tête prédéterminé est supprimé, si la direction de transmission du paquet est identique à la direction de l'interface de diffusion en continu (101) et si l'en-tête au protocole IP se trouve dans le paquet.

14. Procédé d'émission de données dans une carte interface de réseau comprenant :
(a) la génération d'informations de temps d'enregistrement d'une étiquette et l'attachement de l'étiquette à une entrée d'une unité de flux de diffusion en continu audio ou vidéo (AV) sur une interface de diffusion en continu (101),
(b) la formation d'un paquet à partir d'une quantité prédéterminée d'unités de flux AV de diffusion en continu comportant des informations d'étiquette,
(c) l'attachement d'un en-tête au protocole de datagramme utilisateur (UDP) et d'un en-tête au protocole Internet (IP) au paquet lorsque les unités de flux AV de diffusion en continu sont transférées tout en étant converties en un paquet au protocole IP, **caractérisé par**
(d) la création d'un en-tête LS prédéterminé, comprenant un en-tête de commande de couche de liaison (LLC) et un en-tête au protocole d'accès à un sous-réseau (SNAP) incluant des informations se rapportant au type d'un paquet à transférer et à la direction de transmission du paquet, ainsi que l'ajout de l'en-tête LS prédéterminé au paquet, et
(e) la formation d'une trame de commande d'accès au support (MAC) en ajoutant un en-tête de commande MAC au paquet, auquel est ajouté l'en-tête prédéterminé, ainsi que le transfert de la trame de commande MAC sur un réseau.
